# EUROPÄISCHE PATENTSCHRIFT

(11) **EP 1 977 820 B1**
(45) Veröffentlichungstag und Bekanntmachung des Hinweises auf die Patenterteilung: **13.10.2010**
(21) Anmeldenummer: 08004332.6
(22) Anmeldetag: 09.03.2008
(51) Int. Cl.: B01F 9/02, B01F 15/00, G01N 21/85

(54) **Anordnung eines spektroskopischen Analysegerätes gegenüber einem Beobachtungsfenster an einem Mischbehälter**
Assembly of a spectroscopic analysis device opposite an observation window on a mixture container
Agencement d'un appareil d'analyse spectroscopique contre une fenêtre d'observation sur un récipient de mélange

(30) Priorität: 10.03.2007 DE 102007011745
(43) Veröffentlichungstag der Anmeldung: 08.10.2008
(73) Patentinhaber: Glatt Systemtechnik GmbH, 01277 Dresden (DE)
(72) Erfinder: Pritzke, Heinz, 01737 Kesselsdorf, OT Braunsdorf (DE); Mannhardt, Joachim, 73569 Eschach (DE)
(74) Vertreter: Pätzelt, Peter

(56) Entgegenhaltungen:
- EP-A- 1 442 785

## Beschreibung

Die Erfindung betrifft die Anordnung eines spektroskopischen Analysegerätes gegenüber einem Beobachtungsfenster an einem Mischbehälter nach dem Oberbegriff des Anspruchs 1, insbesondere für das Mischen pulver- oder granulatförmiger, chemischer oder pharmazeutischer Komponenten.

Bei neueren Verfahren zum Mischen pulver- oder granulatförmiger, chemischer oder pharmazeutischer Komponenten wird während des Mischens der Verfahrensfortschritt im Sinne von PAT (Process Analytical Technology) mit spektroskopischen Verfahren überwacht und gesteuert. Ziel ist es, die Mischgüte und in der Folge den Zeitpunkt des Abschlusses des Mischprozesses durch eine Online-Analytik zu bestimmen. Gängige Analysemethoden sind die optische, akustische und Terahertz Spektroskopie. Bei den optischen Methoden kommt die UV-VIS, NIR Reflektions-Spektroskopie und Fluoreszenz-Spektroskopie zum Einsatz. Dabei muss die Beobachtung der Mischvorgänge zwangsläufig durch ein Beobachtungsfenster erfolgen.

Nach dem Stand der Technik sind verschiedene Einrichtungen zur Anwendung von spektroskopischen Verfahren bei Mischvorgängen bekannt. Beispielsweise offenbart die EP 1 442 785 B1 einen Mischapparat zum Mischen von Komponenten, gemäß dem Oberbegriff des Anspruchs 1, die gewöhnlich in Form von Pulvern vorliegen. Die Vorrichtung umfasst einen Behälter zur Aufnahme der Komponenten, Antriebsmittel zum Drehen oder Schwingen des Behälters und mindestens ein spektroskopisches Überwachungsmittel, das sich während des Mischens mit dem Behälter dreht. Das spektroskopische Überwachungsmittel befindet sich direkt am Behälter oder wenigstens an einem Rahmen, der den Behälter trägt. Der Behälter ist mit einem Fenster versehen und das spektroskopische Überwachungsmittel ist dazu passgenau am Behälter angeordnet. Das Überwachungsmittel ist vorzugsweise in Form einer tragbaren unabhängigen Einheit ausgebildet, die in geeigneter Weise in Flucht mit dem Fenster mittels lösbarer, vorzugsweise einer Schnellschluss-Vorrichtung, z.B. in Form einer oder mehrerer Einrastvorrichtungen, welche mit Verankerungen zusammenarbeiten, angebracht ist. Das Überwachungsmittel ist abnehmbar am Behälter angebracht und wird nach Abschluss des Mischzyklusses vom Behälter abgenommen.

Bei allen derartigen Vorrichtungen ist ein hoher manueller Aufwand für das Montieren und Demontieren des Analysegerätes oder von Teilen davon erforderlich, wodurch Automatisierungsvorgänge stark behindert werden.

Der Erfindung liegt damit als Aufgabe zugrunde, eine Anordnung eines spektroskopischen Analysegerätes gegenüber dem Beobachtungsfenster an einem Mischbehälter anzugeben, bei der keine manuellen Arbeiten erforderlich sind und mit der eine Automatisierung der Zuführung und Halterung des Mischbehälters innerhalb einer Mischeinrichtung möglich ist.

Die Erfindung löst die Aufgabe durch die im Anspruch 1 angegebenen Merkmale. Vorteilhafte Weiterbildungen der Erfindung sind in den Unteransprüchen gekennzeichnet und werden nachstehend zusammen mit der Beschreibung der bevorzugten Ausführung der Erfindung, einschließlich der Zeichnung, näher dargestellt.

Zur spektroskopischen Analyse der Homogenität eines Mischgutes innerhalb eines Mischbehälters ist der Sensor des Analysegerätes zur Messung in bekannter Weise gegenüber einem Beobachtungsfenster im Mischbehälter positioniert. Dabei bezieht sich die Erfindung auf Anordnungen, bei denen der Mischbehälter transportabel ist und zum Mischen einer Mischeinrichtung mit einer Rotationsachse X zugeführt und in dieser positioniert sowie gehaltert wird.

Als Mischbehälter kommen alle technologisch anfallenden Behältnisse in Betracht, in denen mehrere Komponenten gemischt werden sollen. Das können sowohl transportable technologische Maschinenkomponenten als auch spezielle Misch-Container oder kurz Container in zylindrischer, kubischer oder anderer geometrischer Form sein. Die Misch-Container als Mischbehälter werden in üblicher Weise durch vertikale Produktströme mit mehreren Komponenten gefüllt und nach dem Mischen entleert. Unabhängig von der Lage des Mischbehälters während des Mischens weisen die Mischbehälter im Ruhezustand eine vertikale zentrische Achse Y auf. Nach dem Einsetzen des Mischbehälters in die Mischeinrichtung hat die Achse Y zur Rotationsachse X der Mischeinrichtung eine konkrete definierte Lage.

Die definierte Position des Mischbehälters in der Mischeinrichtung wird in unterschiedlicher Weise durch Traggabeln, Aufnahmetaschen an der Mischeinrichtung oder im
Folgenden beispielhaft über Halteleisten am Mischbehälter die auf Führungselementen an der Mischeinrichtung aufliegen, realisiert. Die anspruchsgemäßen Elemente "Halteleisten" und "Führungselemente" verstehen sich in der vorstehenden Definition.

Erfindungsgemäß ist mindestens der Sensor des Analysegerätes derart an der Mischeinrichtung angeordnet, dass er sich beim Mischen um die Rotationsachse X dreht, wobei die optische Öffnung des Sensors einen Abstand a zur Rotationsachse X und einen Abstand b zur Achse Y aufweist. In den Ausführungsbeispielen wird dieser Zusammenhang näher erläutert.

Weiterhin ist das Beobachtungsfenster im Mischbehälter derart angeordnet ist, dass sich das Beobachtungsfenster in der Mischposition, d.h. wenn der Mischbehälter in der Mischeinrichtung positioniert ist, im etwa gleichen Abstand a zur Rotationsachse X und etwa gleichem Abstand b zur Achse Y befindet. Dabei können die Abstände a und b des Beobachtungsfensters und des Sensors geringfügig voneinander abweichen, derart dass zwischen der optischen Öffnung des Sensors und dem Beobachtungsfenster ein technisch bedingter Spalt vorhanden ist.

Bei dieser Anordnung können die Beobachtungsfenster einer Vielzahl verschiedener Mischbehälter ohne Änderungen oder Einstellungen in eine konkret vorhandene Mischeinrichtung eingesetzt und die erforderliche spektroskopische Analyse durchgeführt werden. Es ist keinerlei manuelle Arbeit erforderlich, da das spektroskopische Analysegerät oder mindestens der Sensor ständig an der Mischeinrichtung angeordnet ist und das Beobachtungsfenster im Mischbehälter beim Einsetzen in die Mischeinrichtung zwangsweise definiert zum Sensor positioniert wird.

Zur Positionierung des Mischbehälters in der Mischeinrichtung können am Mischbehälter und an der Mischeinrichtung Positionierelemente vorhanden sein, mit denen der Mischbehälter beim Einsetzen in die Mischeinrichtung in die vorgesehene definierte Position zum Mischen gezwungen wird. Die Ausführung kann mit bekannten Mitteln des Standes der Technik erfolgen. Z.B. können Kegelspitzen in Zentrierlöcher eingreifen oder Anschläge am Mischbehälter können mit Anschlägen an der Mischeinrichtung zusammen wirken. Wenn der Mischbehälter mit Halteleisten auf Tragschienen an der Mischeinrichtung aufgesetzt wird, kann der Mischbehälter mit Druckeinrichtungen auf den Tragschienen verschoben werden bis die Anschläge aneinander liegen. Danach werden die Halteleisten mit den Tragschienen verspannt, damit während des Mischens die Position des Mischbehälters in der Mischeinrichtung gesichert ist.

Als vorteilhaft hat es sich erwiesen, wenn der Sensor oder eine Aufnahme für den Sensors in Richtung zum Beobachtungsfenster elastisch oder federnd gehaltert ist. Beim Einsetzen des Mischbehälters in die Mischeinrichtung wird dann das Beobachtungsfenster gegen den gefederten Sensor gedrückt. Dabei können die sich berührenden Elemente als Zentrierkegel und Zentrierkonus oder ähnliche Positionierhilfen ausgebildet sein. Die elastische Halterung des Sensors führt dazu, dass dieser unter der Spannung der elastischen Lagerung am Beobachtungsfenster oder an der umgebenden Wand des Mischbehälter anliegt.

Insbesondere beim Einsatz unterschiedlicher Mischbehälter, z.B. konische Behälter, kubische Behälter oder Container mit Auslasskegeln, deren Kegelwinkel voneinander abweichen, hat es sich als vorteilhaft erwiesen, dass die Sensoraufnahme mit dem Sensor an einem Schwenkarm gehaltert ist, der schwenkbar an der Mischeinrichtung gelagert ist. Damit kann die optische Öffnung des Sensors auf einem Kreisbogen geschwenkt werden, der den Kreuzungspunkt der Abstände a und b schneidet.

Das Schwenken kann dabei über passive Mittel wie eine Feder oder eine Gasfeder oder aktive Mittel wie elektromagnetische, elektromotorische oder pneumatische Antriebe bewirkt werden. Bei den passiven Mitteln wird die Öffnung des Beobachtungsfensters im Ruhezustand in einer maximalen Schwenkposition gehalten und erst beim Einsetzen des Mischbehälters drückt das Beobachtungsfenster oder gesonderte Elemente gegen den Sensor. Bei den aktiven Mitteln zum Schwenken wird der Mischbehälter erst in der Mischeinrichtung positioniert und danach wird der Sensor gegen das Beobachtungsfenster bewegt.

Bei der schwenkbaren Halterung des Sensors und beim Einsatz unterschiedlicher Mischbehälter befindet sich der Kreuzungspunkt einer Linie im Abstand a zur Rotationsachse X und einer Linie im Abstand b zur Achse Y auf dem Kreisbogen auf dem der Sensor geschwenkt wird an unterschiedlichen Positionen, aber immer auf dem Kreisbogen. Das jeweilige Beobachtungsfenster wird danach ebenfalls derart angeordnet, dass es in einer Position auf der Kreisbahn liegt. Das Beobachtungsfenster ist derart angeordnet, dass es sich in der Mischposition ebenfalls auf der genannten Kreisbahn befindet, so dass sich der Sensor und das Beobachtungsfenster gegenüber stehen.

Wie im nachfolgenden Ausführungsbeispiel II dargestellt ist, kann die Sensoraufnahme mit dem Sensor bei günstigen geometrischen Gegebenheiten auch derart beweglich gelagert sein, dass geometrische Abweichungen z.B. mit Zentrierhilfen ausgeglichen werden können.

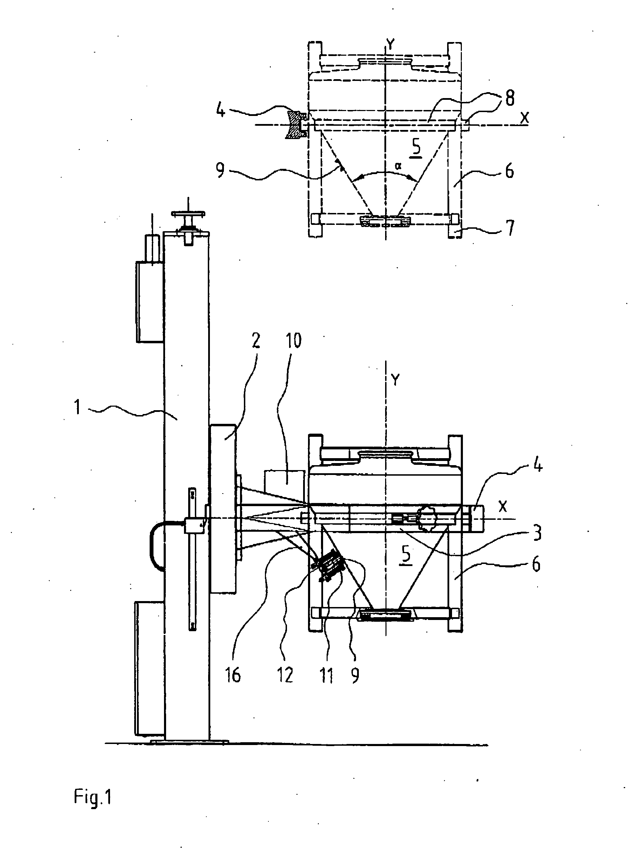

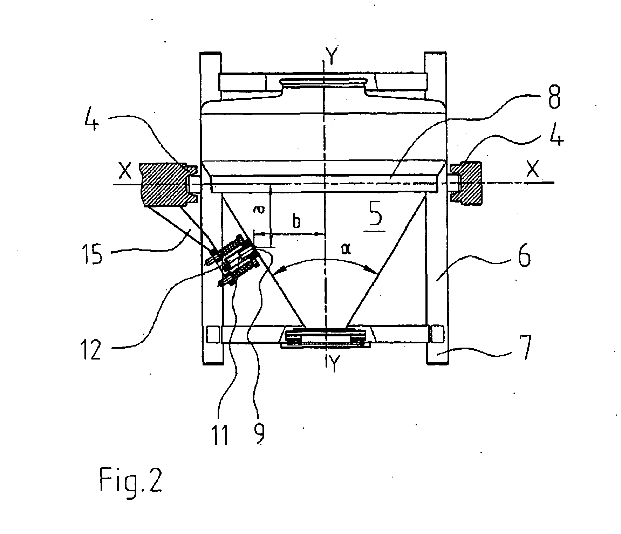

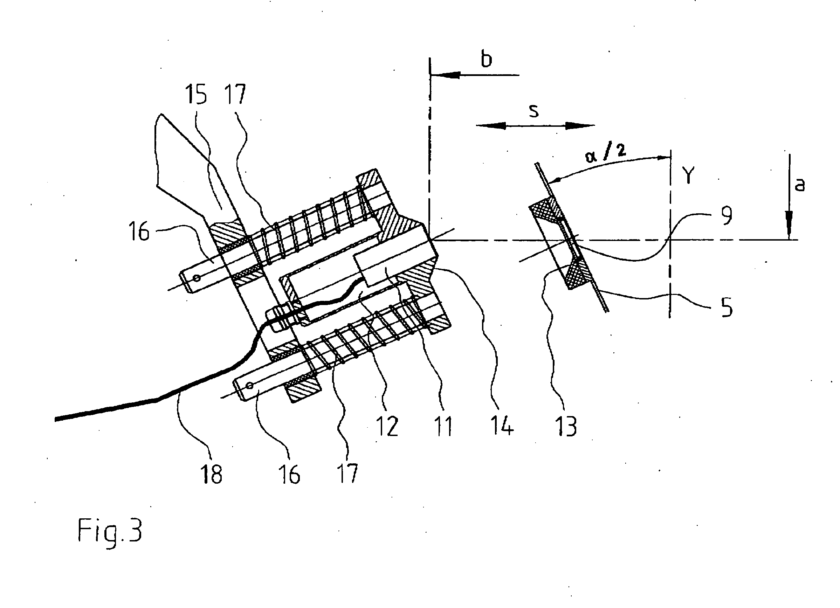

Die Erfindung wird nachstehend an zwei Ausführungsbeispielen näher erläutert. Zugehörig zum Ausführungsbeispiel I zeigt Figur 1 eine Säulen-Container-Mischeinrichtung mit einem eingesetzten Mischbehälter. Figur 2 zeigt den Mischbehälter in Figur 1 in einem vergrößerten Ausschnitt. Figur 3 zeigt in einem Ausschnitt den Bereich am Beobachtungsfenster und am Sensor kurz vor Erreichen der definierten Position zum Mischen.

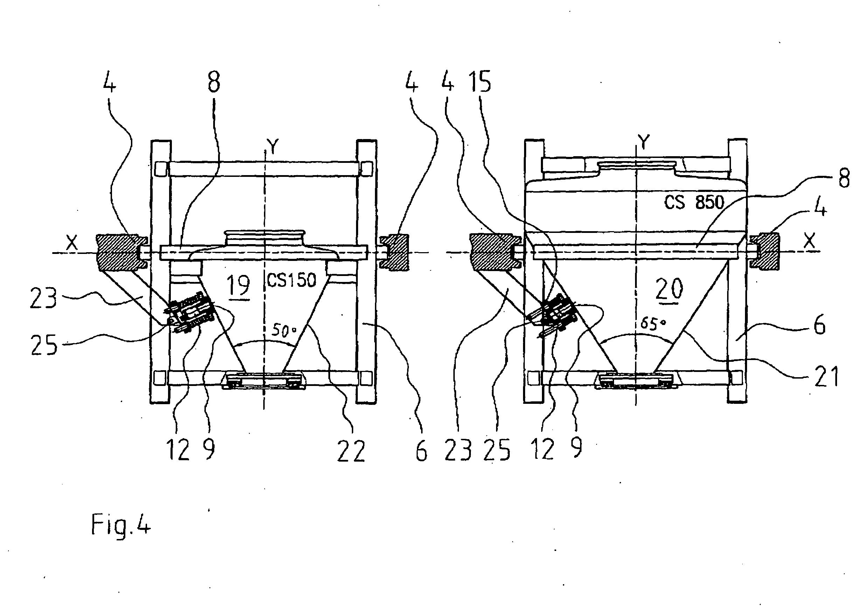

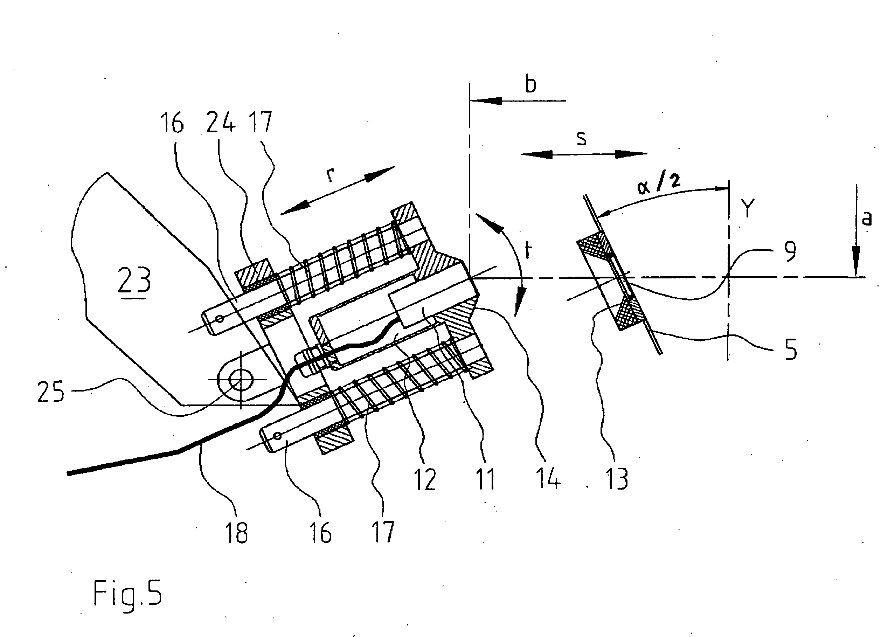

Zugehörig zum Ausführungsbeispiel II zeigt Figur 4 zwei voneinander abweichende Mischbehälter in Form von Mischcontainern mit unterschiedlichem Winkel des Auslasskonus. Figur 5 zeigt in einem Ausschnitt den Bereich am Beobachtungsfenster und am Sensor kurz vor Erreichen der definierten Position zum Mischen.

In der zugehörigen Figur 1 ist eine als solche bekannte Säulen-Container-Mischeinrichtung in der Gesamtheit dargestellt. Die Säulen-Container-Mischeinrichtung besteht im Wesentlichen aus einer Tragsäule 1 und einer Mischeinrichtung 2, an der Tragarme 3 vorhanden sind. In der Mischeinrichtung 2 ist ein transportabler Container mit einer im Ruhezustand zentralen vertikalen Achse Y eingesetzt, der nachfolgend umfassender einheitlich als Mischbehälter 5 bezeichnet wird.

Zum besseren Verständnis ist der Mischbehälter 5 in Figur 1 zusätzlich noch einmal oberhalb der Einrichtung mit gestrichelten Linien dargestellt, wobei in der praktischen Anwendung der Mischbehälter 5 nicht von oben sondern seitlich der Mischeinrichtung 2 zugeführt wird.

Die Mischeinrichtung 2 ist höhenverstellbar und drehbar an der Tragsäule 1 gelagert. An der Mischeinrichtung 2 sind Führungselemente 4 vorhanden, die geeignet sind, den Mischbehälter 5 mit entsprechend angepassten Halteelementen, im Ausführungsbeispiel in Form von Halteleisten 8, aufzunehmen. Der Mischbehälter 5 ist in einem Gestell 6 angeordnet, welches bei Bedarf auch unterschiedlich große Mischbehälter 5 aufnehmen kann, und weist Füße 7 auf, auf denen der Mischbehälter 5 außerhalb der Mischeinrichtung 2 abgestellt werden kann. Im Ausführungsbeispiel sind auch die Halteleisten 8 am Gestell 6 angeordnet. Je nach technologischer Gegebenheit kann das Gestell 6 auch andersartig ausgeführt sein oder ganz entfallen. Im letzteren Fall sind die Halteleisten 8 direkt am Mischbehälter 5 angeordnet.

Ist der Mischbehälter 5 in die Mischeinrichtung 2 eingesetzt, liegen die Halteleisten 8 auf den Führungselementen 4 an den Tragarmen 3 auf und die Mischeinrichtung 2 kann derart verspannt werden, dass der Mischbehälter 5 auch während des Mischens stabil in der definierten Achse Y in der Mischeinrichtung 2 positioniert ist. Zum Mischen der Komponenten im Mischbehälter 5 rotiert die Mischeinrichtung 2 um die Rotationsachse x.

Aus Figur 1 ist auch die erfindungsgemäße Anordnung des spektroskopischen Analysegerätes 10 mit dem zugehörigen Sensor 11 gegenüber dem Beobachtungsfenster 9 am Mischbehälter 5 zu entnehmen. Figur 2 zeigt einen vergrößerten Ausschnitt aus Figur 1. Das Beobachtungsfenster 9 ist im unteren Abschnitt des Mischbehälters 5, der als Kegelstumpf mit einem Öffnungswinkel a von 65 Grad ausgebildet ist, angeordnet. Dieser kegelstumpfförmige Abschnitt dient insbesondere der einfachen Entleerung des Mischbehälters 5. Die Anordnung ermöglicht auch, dass das Beobachtungsfenster 9 beim Einsetzen des Mischbehälters 5 in die Mischeinrichtung 2 sehr einfach gegen die Sensoraufnahme 12 mit dem Sensor 11 bewegt werden kann.

Erfindungsgemäß ist die optische Öffnung des Sensors 11 im Schnittpunkt einer Linie im Abstand a von der Rotationsachse X und einer Linie im Abstand b von der Achse Y positioniert. In entsprechender Weise ist auch das Beobachtungsfenster 9 innerhalb des Mischbehälters 5 derart angeordnet, dass es sich nach dem Einsetzen in die Mischeinrichtung 2 ebenfalls im Schnittpunkt der Linien im Abstand a und b befindet.

Figur 3 zeigt die Einzelheit entsprechend Figur 1 und 2 in einer Stellung, bei der sich der Mischbehälter 5 mit dem Beobachtungsfenster 9 kurz vor der definierten Position zum Mischen in der Mischeinrichtung 2 befindet. Die Sensoraufnahme 12 mit dem Sensor 11 steht noch nicht im Kontakt mit dem Beobachtungsfenster 9. Erst wenn der Mischbehälter 5 mit dem Beobachtungsfenster 9 die definierte Position in der Mischeinrichtung 2 erreicht, wird ein Zentrierkonus 13 außen vor dem Beobachtungsfenster 9 gegen einen Zentrierkegel 14 an der Sensoraufnahme 12 gedrückt. Der Richtungspfeil s gibt die relative Bewegungsrichtung des Beobachtungsfensters 9 und des Sensors 11 zueinander an.

Die Sensoraufnahme 12 ist über eine Halterung 15 gefedert an der Mischeinrichtung 2 gehaltert. Dazu ist der Zentrierkegel 14 mit der Sensoraufnahme 12 auf zwei Führungsbolzen 16 gelagert und kann gegen die Kraft je einer Feder 17 auf den Führungsbolzen 16 verschoben werden. Die Führungsbolzen 16 sind an der Halterung 15 gelagert. Die elektrische Verbindung zwischen dem Sensor 11 und dem Analysegerät 10 erfolgt über ein Verbindungskabel 18.

Die erfindungsgemäße Anordnung hat den Vorteil, dass das spektroskopische Analysegerät 10 und der Sensor 11 nur einmal und dauerhaft an der Mischeinrichtung 2 vorhanden ist und zum Einsatz nicht bewegt oder montiert werden muss. Zugehörig ist am Mischbehälter 5, oder einer Vielzahl davon, nur ein einfaches Beobachtungsfenster 9 vorhanden. Das lagegenaue Positionieren des Beobachtungsfensters 9 innerhalb der Mischeinrichtung 2 ist mit einfachen bekannten Mittel möglich.

In der zugehörigen Figur 4 sind beispielhaft zwei voneinander abweichende Mischbehälter in Form von Mischcontainern mit unterschiedlichem Winkel des Auslasskonus dargestellt. Der Container 19 hat ein Volumen von 150 Liter und der Container 20 ein Volumen von 850 Liter. Beide Container 19 und 20 sind in einem Gestell 6 und in der Achse Y angeordnet, die dem Ausführungsbeispiel I entsprechen.

Der Container 19 hat einen Auslasskegel 22 mit einem Winkel von 50 Grad und der Container 20 hat einen Auslasskegel 21 mit einem Winkel von 65 Grad. Über die Halteleisten 8 am Gestell 6 können die Container 19 und 20 wahlweise in identischer Weise, wie im Ausführungsbeispiel I erläutert, in die Mischeinrichtung 2 eingesetzt und positioniert werden.

Im Unterschied zum Ausführungsbeispiel I zeigt Figur 5 wie die Sensoraufnahme 12 mit dem Sensor 11 über eine Halterung 23 an der Mischeinrichtung 2 gelagert ist. Die Sensoraufnahme 12 ist in ähnlicher Weise wie im Ausführungsbeispiel I axial gefedert. Im Unterschied sind die Führungsbolzen 16 jedoch in einer Lagerplatte 24 geführt, die um den Drehpunkt 25 schwenkbar an der Halterung 23 gelagert ist. Dabei ist die Ruhelage des Zentrierkegels 14 so ausgelegt, dass er bei Anwendung verschiedener Mischbehälter 5 immer in den Bereich des jeweiligen Zentrierkonus 13 eingreift. Die Ruhelage des Zentrierkegels 14 kann entgegen der Darstellung in Figur 5 über eine Feder zwischen der Halterung 23 und der Lagerplatte 24 auch in einer zentrischen Position gehalten werden, von der aus der Sensor 11 beidseitig geschwenkt werden kann. Der Sensor 11 passt sich über den Zentrierkonus 13 und den Zentrierkegel 14 an die unterschiedlichen Winkel des Beobachtungsfensters 9 an den Auslasskegeln 21 und 22 an. Mit dieser Ausbildung wird grundsätzlich nicht die Lage des Sensors 11 gegenüber dem Kreuzungspunkt der Linien a und b verändert.

In der Figur 5 ist die Beweglichkeit des Sensors 11 mit den Richtungspfeilen r und t dargestellt. Der Richtungspfeil s gibt, wie auch in Figur 3, die relative Bewegungsrichtung des Beobachtungsfensters 9 und des Sensors 11 zueinander an.

Die Beobachtungsfenster 9 sind erfindungsgemäß derart an den Containern 19 und 20 angeordnet, dass sie sich in der Mischposition entsprechend den Abständen des Sensors 11 in der konkreten Mischeinrichtung 2 in erfindungsgemäßer Weise im Abstand a zur Rotationsachse X und im Abstand b zur Achse Y befinden.

## Patentansprüche

1. Anordnung eines Analysegerätes (10) zur spektroskopischen Analyse der Homogenität eines Mischgutes innerhalb eines Mischbehälters (5), bei der der Sensor (11) des Analysegerätes (10) zur Messung gegenüber einem Beobachtungsfenster (9) im Mischbehälter (5) positioniert ist,
wobei der Mischbehälter (5) transportabel und zum Mischen mit seiner zentrischen Achse Y in einer definierten Mischposition in einer Mischeinrichtung (2) mit einer Rotationsachse X gehaltert ist, derart dass Halteleisten (8) am Mischbehälter (5) auf Führungselementen (4) an der Mischeinrichtung (2) aufliegen,
**dadurch gekennzeichnet, dass**
- mindestens der Sensor (11) des Analysegerätes (10) derart an der Mischeinrichtung (2) angeordnet ist, dass er sich beim Mischen um die Rotationsachse X dreht, wobei die optische Öffnung des Sensors (11) einen Abstand a zur Rotationsachse X und einen Abstand b zur Achse Y aufweist und
- dass das Beobachtungsfenster (9) im Mischbehälter (5) derart angeordnet ist, dass sich das Beobachtungsfenster (9) in der definierten Mischposition im etwa gleichen Abstand a zur Rotationsachse X und etwa gleichen Abstand b zur Achse Y befindet, wobei die Abstände a und b derart geringfügig abweichen können, dass zwischen der optischen Öffnung des Sensors (11) und dem Beobachtungsfenster (9) ein technisch bedingter Spalt vorhanden ist.

2. Anordnung nach Anspruch 1, **dadurch gekennzeichnet, dass** am Mischbehälter (5) und an der Mischeinrichtung (2) zueinander passende Positionierelemente vorhanden sind, mit denen der Mischbehälter (5) beim Einsetzen in die Mischeinrichtung (2) in die vorgesehene definierte Mischposition gezwungen wird.

3. Anordnung nach Anspruch 1 oder 2, **dadurch gekennzeichnet, dass** der Sensor (11) in einer Sensoraufnahme (12) gehaltert ist, die in der Achse des Beobachtungsfensters (9) derart elastisch gelagert ist, dass der Sensor (11) unter der Spannung seiner elastischen Lagerung am Beobachtungsfenster (9) oder an der umgebenden Wand des Mischbehälter (5) anliegt, wenn dieser sich in der definierten Mischposition befindet.

4. Anordnung nach Anspruch 3, **dadurch gekennzeichnet, dass** die Sensoraufnahme (12) an Führungsbolzen (16) verschiebbar gelagert ist, wobei Federn (17) die Sensoraufnahme (12) in Richtung zum Beobachtungsfenster (9) drücken.

5. Anordnung nach einem der Ansprüche 1 bis 4, **dadurch gekennzeichnet, dass** die Sensoraufnahme (12) mit dem Sensor (11) mittels eines Schwenkarms an der Mischeinrichtung (2) gehaltert ist, derart dass die optische Öffnung des Sensors (11) auf einem Kreisbogen geschwenkt werden kann, der den Kreuzungspunkt der Abstände a und b schneidet.

6. Anordnung nach Anspruch 5, **dadurch gekennzeichnet, dass** der Schwenkarm durch passive Druckelemente permanent in die Position gedrückt wird, bei der die optische Öffnung des Sensors (11) die definierte Position mit Abstand a zur Rotationsachse X und mit Abstand b zur Achse Y einnimmt.

7. Anordnung nach Anspruch 5, **dadurch gekennzeichnet, dass** der Schwenkarm durch aktive Druckelemente in die Position gedrückt werden kann, bei der die optische Öffnung des Sensors (11) die definierte Position mit Abstand a zur Rotationsachse X und mit Abstand b zur Achse Y einnimmt.

8. Anordnung nach einem der Ansprüche 1 bis 4, **dadurch gekennzeichnet, dass** die Sensoraufnahme (12) mit dem Sensor (11) an einer Lagerplatte (24) gelagert ist, die schwenkbar an einer Halterung (23) an der Mischeinrichtung (2) gehaltert ist, derart dass die optische Öffnung des Sensors (11) mittels Zentrierelementen an einen abweichenden Winkel des Beobachtungsfensters (9) anpasst wird.

## Claims

1. Arrangement of an analysis instrument (10) for spectroscopic analysis of the homogeneity of a mixture within a mixing container (5), in which the sensor (11) of the analysis instrument (10) is positioned opposite an observation window (9) in the mixing container (5) for measurement purposes, in which the mixing container (5) can be transported and is held for mixing purposes with its centric axis Y in a defined mixing position in a mixing apparatus (2) with a rotational axis X such that the support strips (8) on the mixing container (5) lie on guide elements (4) on the mixing apparatus (2),
**characterized**
- **in that** at least the sensor (11) of the analysis instrument (10) is arranged on the mixing apparatus (2) such that it turns around the rotational axis X during mixing, the optical opening of the sensor (11) having a distance a from the rotational axis X and a distance b from the axis Y and
- **in that** the observation window (9) is arranged in the mixing container (5) such that in the defined mixing position the observation window (9) is at approximately the same distance a from the rotational axis X and at approximately the same distance b from the axis Y, with it being possible for the distances a and b to deviate slightly such that for technical reasons there is a gap between the optical opening of the sensor (11) and the observation window (9).

2. Arrangement according to Claim 1, **characterized in that** on the mixing container (5) and on the mixing apparatus (2) there are positioning elements matched to one another, by means of which the mixing container (5) is forced into the provided defined mixing position when it is inserted into the mixing apparatus (2).

3. Arrangement according to Claim 1 or 2, **characterized in that** the sensor (11) is held in a sensor receptacle (12), which is mounted elastically on the axis of the observation window (9) such that the sensor (11) under the tension of its elastic mounting butts against the observation window (9) or the surrounding wall of the mixing container (5) when the latter is in the defined mixing position.

4. Arrangement according to Claim 3, **characterized in that** the sensor receptacle (12) is mounted on guide bolts (15) in a displaceable fashion, with springs (17) pushing the sensor receptacle (12) in the direction of the observation window (9).

5. Arrangement according to one of Claims 1 to 4, **characterized in that** the sensor receptacle (12) with the sensor (11) is held against the mixing apparatus (2) by means of a pivot arm such that the optical opening of the sensor (11) can be pivoted along an arc that cuts the crossing point of distances a and b.

6. Arrangement according to Claim 5, **characterized in that** passive pressure elements permanently push the pivot arm into the position in which the optical opening of the sensor (11) assumes the defined position with a distance a from the rotational axis X and with a distance b from the axis Y.

7. Arrangement according to Claim 5, **characterized in that** active pressure elements can push the pivot arm into the position in which the optical opening of the sensor (11) assumes the defined position with a distance a from the rotational axis X and with a distance b from the axis Y.

8. Arrangement according to one of Claims 1 to 4, **characterized in that** the sensor receptacle (12) with the sensor (11) is mounted on a mounting plate (24), which is held such that it can pivot on a holder (23) on the mixing apparatus (2) such that the optical opening of the sensor (11) is matched to a deviating angle of the observation window (9) by means of centring elements.

## Revendications

1. Arrangement d'un analyseur (10) pour l'analyse spectroscopique de l'homogénéité d'une matière mélangée à l'intérieur d'un récipient de mélange (5), avec lequel le capteur (11) de l'analyseur (10) est positionné à l'opposé d'une fenêtre d'observation (9) dans le récipient de mélange (5) pour réaliser la mesure,
le récipient de mélange (5) étant transportable et, pour réaliser le mélange, étant maintenu avec son axe central Y dans une position de mélange définie dans un dispositif de mélange (2) avec un axe de rotation X de telle sorte que des baguettes de maintien (8) sur le récipient de mélange (5) reposent sur des éléments de guidage (4) sur le dispositif de mélange (2), **caractérisé en ce que**
- au moins un capteur (11) de l'analyseur (10) est disposé sur le dispositif de mélange (2) de telle sorte qu'il tourne autour de l'axe de rotation X lors du mélange, l'ouverture optique du capteur (11) présentant un écart a par rapport à l'axe de rotation X et un écart b par rapport à l'axe Y et
- que la fenêtre d'observation (9) est disposée dans le récipient de mélange (5) de telle sorte que la fenêtre d'observation (9), dans la position de mélange définie, se trouve approximativement au même écart a de l'axe de rotation X et approximativement au même écart b de l'axe Y, les écarts a et b pouvant être légèrement différents de sorte qu'il existe, pour des raisons techniques, un interstice entre l'ouverture optique du capteur (11) et la fenêtre d'observation (9).

2. Arrangement selon la revendication 1, **caractérisé en ce qu'**il existe sur le récipient de mélange (5) et sur le dispositif de mélange (2) des éléments de positionnement adaptés l'un à l'autre, avec lesquels le récipient de mélange (5) est forcé dans la position de mélange définie prévue lors de l'introduction dans le dispositif de mélange (2).

3. Arrangement selon la revendication 1 ou 2, **caractérisé en ce que** le capteur (11) est maintenu dans un logement de capteur (12) qui est supporté de manière flexible dans l'axe de la fenêtre d'observation (9) de telle sorte que le capteur (11), sous la tension de son support flexible, repose contre la fenêtre d'observation (9) ou contre la paroi qui entoure le récipient de mélange (5) lorsque celui-ci se trouve dans la position de mélange définie.

4. Arrangement selon la revendication 3, **caractérisé en ce que** le logement de capteur (12) est monté de manière coulissante sur des goujons de guidage (16), des ressorts (17) poussant le logement de capteur (12) en direction de la fenêtre d'observation (9).

5. Arrangement selon l'une des revendications 1 à 4, **caractérisé en ce que** le logement de capteur (12) muni du capteur (11) est maintenu sur le dispositif de mélange (2) au moyen d'un bras pivotant de telle sorte que l'ouverture optique du capteur (11) peut être pivotée sur un arc de cercle qui croise le point d'intersection des écarts a et b.

6. Arrangement selon la revendication 5, **caractérisé en ce que** le bras pivotant est constamment poussé par des éléments de compression passifs dans la position dans laquelle l'ouverture optique du capteur (11) prend la position définie avec l'écart a par rapport à l'axe de rotation X et avec l'écart b par rapport à l'axe Y.

7. Arrangement selon la revendication 5, **caractérisé en ce que** le bras pivotant peut être poussé par des éléments de compression actifs dans la position dans laquelle l'ouverture optique du capteur (11) prend la position définie avec l'écart a par rapport à l'axe de rotation X et avec l'écart b par rapport à l'axe Y.

8. Arrangement selon l'une des revendications 1 à 4, **caractérisé en ce que** le logement de capteur (12) muni du capteur (11) est maintenu sur une plaque d'appui (24) qui est maintenue de manière pivotante sur un support (23) sur le dispositif de mélange (2) de telle sorte que l'ouverture optique du capteur (11) est adapté au moyen d'éléments de centrage à un angle différent de la fenêtre d'observation (9).
